# EUROPÄISCHE PATENTANMELDUNG

(11) **EP 0 932 238 A2**
(43) Veröffentlichungstag der Anmeldung: **28.07.1999**
(21) Anmeldenummer: 99100174.4
(22) Anmeldetag: 07.01.1999
(51) Int. Cl.: H02J 7/00

(54) **Verfahren zur Steuerung der Stromversorgung eines elektrisch betriebenen Gerätes**

(30) Priorität: 24.01.1998 DE 19802731
(71) Anmelder: Harting KGaA, 32325 Espelkamp (DE)
(72) Erfinder: Harting, Dietmar, Dipl.-Kfm., 32339 Espelkamp (DE); Blum, Herbert, Dr.-Ing., 73773 Aichwald (DE)

(57) **Zusammenfassung**

Für ein Verfahren zur Steuerung der Stromversorgung eines elektrisch betriebenen Gerätes, insbesondere eines Warenverkaufsautomaten, mit einem aufladbaren Energiespeicher (A1) zur Stromversorgung der elektrischen Einrichtungen (HV,NV1,NV2) des Gerätes, wobei zur Aufladung des Energiespeichers Solarzellen (SZ) oder andere Energieerzeuger vorgesehen sind, wird vorgeschlagen, das Gerät mit mindestens einem zusätzlichen Energiespeicher (A2,A3) zu versehen, den Ladezustand, d. h. die verfügbare Kapazität der Energiespeicher mittels einer Meßeinrichtung (AÜ) zu erfassen, und bei geladenem Energiespeicher den Energieerzeuger auf den nächsten Energiespeicher umzuschalten, bis dieser einen definierten Ladezustand (z. B. volle Kapazität) aufweist.

## Beschreibung

Die Erfindung betrifft ein Verfahren zur Steuerung der Stromversorgung eines elektrisch betriebenen Gerätes, insbesondere eines Warenverkaufsautomaten, Parkautomaten o. ä. Gerätes, mit einem aufladbaren Energiespeicher zur Stromversorgung der elektrischen Einrichtungen des Gerätes, wobei zur Aufladung des Energiespeichers Solarzellen oder andere Energieerzeuger vorgesehen sind.

In Warenverkaufsautomaten, wie auch in anderen Geräten, wie z. B. Parkautomaten, Fahrkartenautomaten etc., die nicht an ein allgemeines Stromnetz angeschlossen sind, besteht ein Problem der Stromversorgung mit Hilfe von Solarzellen und Akkumulatoren, d. h. mit wiederaufladbaren elektrischen Energiespeichern, dadurch, daß Störungen in der Stromversorgung immer einen Ausfall aller Funktionen des Gerätes oder Automaten zur Folge haben. Ausfälle der Stromversorgung können als Ursache z. B. übermäßige und langanhaltende Kälteperioden, zuviel Energieverbrauch als Folge elektrischer Fehlfunktionen und andere Ursachen haben.

Der Erfindung liegt daher die Aufgabe zugrunde, die Stromversorgung, bzw. deren Steuerung, eines Gerätes der eingangs genannten Art dahingehend auszubilden, daß die Energieversorgung des Gerätes stets sichergestellt ist und somit die Betriebssicherheit des Gerätes erhöht wird.

Diese Aufgabe wird dadurch gelöst, daß das Gerät mit mindestens einem zusätzlichen Energiespeicher versehen ist, daß der Ladezustand, d. h. die verfügbare Kapazität der Energiespeicher mittels einer Meßeinrichtung erfaßt wird, und daß bei geladenem Energiespeicher der Energieerzeuger auf den nächsten Energiespeicher umgeschaltet wird bis dieser einen definierten Ladezustand (z. B. volle Kapazität) aufweist.

Vorteilhafte Ausgestaltungen der Erfindung sind in den Ansprüchen 2 bis 6 angegeben.

Die mit der Erfindung erzielten Vorteile bestehen insbesondere darin, daß durch das erfindungsgemäße Verfahren stets sichergestellt ist, daß die elektrischen Einrichtungen (Verbraucher) des Gerätes immer an einen geladenen Energiespeicher geschaltet sind und die elektrischen Funktionen des Gerätes gewährleistet sind. Je nach Anzahl der eingesetzten Energiespeicher erhöht sich die Betriebssicherheit des Gerätes.

Bei einer vorgesehenen Aufteilung der Verbraucher in Verbraucher mit Haupt- und Nebenfunktionen besteht ein weiterer Vorteil darin, daß Verbraucher mit Nebenfunktionen, d.h. mit Funktionen, die zum Betrieb des Gerätes nicht unbedingt notwendig sind, abgeschaltet werden können, wenn der Ladevorgang ggf. nicht ordnungsgemäß erfolgt, um den Stromverbrauch zu senken und die Betriebszeit des Gerätes zu verlängern.

Ein Ausführungsbeispiel der Erfindung ist in einem Blockschaltbild dargestellt und wird im folgenden näher beschrieben.

Zur Stromversorgung eines hier nicht näher dargestellten elektrischen Warenautomaten sind aufladbare Energiespeicher (A1, A2, A3) vorgesehen, deren Aufladung durch eine oder mehrere Solarzellen (SZ) erfolgt. Dabei ist eine Steuerschaltung (ST) vorgesehen, über die die Solarzellen auf die Energiespeicher geschaltet sind. Um ein Überladen der Energiespeicher zu vermeiden, ist ein Laderegler (LR) vorgesehen, der zwischen den Solarzellen und der Steuerschaltung angeordnet ist. Dieser Laderegler ist vorzugsweise mit einer Temperaturkompensation versehen und auf die Ladeschlußspannung der Energiespeicher abgestimmt.
Zur Überwachung des Ladezustandes der Energiespeicher ist eine elektronische Schaltung, hier als Akku-Überwachung (AÜ) bezeichnet, vorgesehen, die einerseits mit den Energiespeichern und andererseits mit der Steuerschaltung (ST) verbunden ist. Die Akku-Überwachung (AÜ) ist im wesentlichen eine Meßeinrichtung mit der, gesteuert von der Steuerschaltung (ST) bei jedem Verkaufsvorgang - also unter Belastung - die Spannungen der Energiespeicher, also deren Ladezustand, gemessen werden. Bei einem zuvor definierten Grenzwert wird durch die Steuerschaltung der Energiespeicher mit der geringsten Ladung mit der Solarzelle (SZ) verbunden, d. h. er wird geladen. Gleichzeitig schaltet die Steuerschaltung (ST) die Verbraucher auf den Energiespeicher mit der höchsten Ladekapazität, so daß beim folgenden Verkaufsvorgang die Verbraucher dann von diesem Energiespeicher versorgt werden. Die verschiedenen Verbraucher, d. h. die verschiedenen elektrischen Einrichtungen des Warenautomaten, sind in Haupt- (HV) und Nebenverbraucher (NV1, NV2) aufgeteilt. Dabei sind die Hauptverbraucher diejenigen, die zum Betrieb des Warenautomaten zwingend notwendig sind. Dies sind z. B. die Münzprüfungs- und die Warenausgabeeinrichtungen. Nebenverbraucher sind z. B. Beleuchtungseinrichtungen des Warenautomaten.

Sofern bei den Messungen des Ladezustandes des gerade nachladenden Energiespeichers bemerkt wird, daß das Nachladen wirkungslos bleibt, weil z. B. der Energiespeicher defekt ist, ist vorgesehen, daß die Nebenverbraucher abgeschaltet werden um den Energieverbrauch des Warenautomaten zu reduzieren um einen 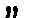 Notbetrieb" bis zur nächsten Wartung zu ermöglichen.

Die Aufladung der Energiespeicher erfolgt, wie vorstehend erläutert, über eine oder mehrere Solarzellen oder andere Energieerzeuger.

Je nach Anzahl der eingesetzten Energiespeicher erhöht sich die Sicherheit der Stromversorgung. Ist ein Energiespeicher nicht bereit (leer), so kann ein zweiter oder dritter usw. Energiespeicher benutzt werden.
Die Aufladung erfolgt über die Solarzelle(n) so, daß die Ansteuerung jeweils vom soeben geladenen Akku auf den nicht geladenen weitergeschaltet wird usw.. Die Versorgung der Verbraucher mit Energie geschieht auf ähnlichem Wege, nämlich der oder die Verbraucher können so geschaltet sein, daß sie immer mit einer geladenen Energiequelle (Akku) elektrisch verbunden sind.

Auf diese Weise wird sichergestellt, daß die Verbraucher immer geladene Energiespeicher vorfinden und die elektrischen Funktionen des Gerätes sichergestellt sind. Zusätzlich können bei dieser Lösung auch Vorrangschaltungen angewendet werden die nach bestimmten Prioritäten abgearbeitet werden. So kann z. B. der Funktionserfüllung der notwendigen Sicherheitsfunktion ein Vorrang in der Stromversorgung vor der Erfüllung von Nebenfunktionen eingeräumt werden.

Bei weiteren vorhandenen Energiespeichern sind diese ebenfalls anzusteuern und zu laden.

Die Ansteuerung zum Ladevorgang erfolgt entweder in einer fest definierten Reihenfolge oder gemäß eines Prioritätskonzepts z. B. je nach Ladezustand der Energiespeicher. Falls ein vorher definierter Ladezustand im Energiespeicher nicht erreicht wird, das heißt Energiespeicher defekt, erfolgt nach einer festgelegten Zeit die Umschaltung und Ladung des nächsten Energiespeichers.

Die Verbraucher sind derartig mit den Energiespeichern verbunden, so daß die einzelnen Verbraucher entweder fest den Energiespeichern zugeordnet sind oder über die Messung des Ladezustandes stets an den Energiespeicher angeschlossen werden, der ausreichende Ladung aufweist. Vorrang haben die notwendigen elektrischen Funktionen des Gerätes. Untergeordnete elektrische Funktionen werden nachrangig bedient oder abgeschaltet.

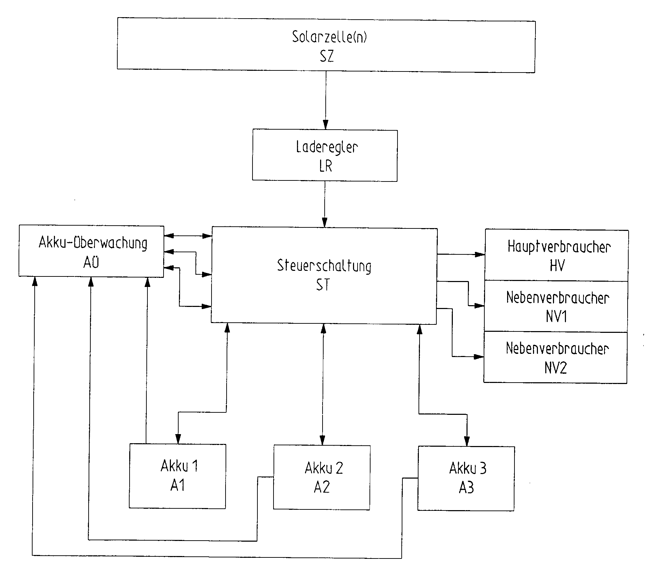

## Patentansprüche

1. Verfahren zur Steuerung der Stromversorgung eines elektrisch betriebenen Gerätes, insbesondere eines Warenverkaufsautomaten, Parkautomaten o. ä. Gerätes, mit einem aufladbaren Energiespeicher zur Stromversorgung der elektrischen Einrichtungen des Gerätes, wobei zur Aufladung des Energiespeichers Solarzellen oder andere Energieerzeuger vorgesehen sind, **dadurch gekennzeichnet,**
daß das Gerät mit mindestens einem zusätzlichen Energiespeicher (A2, A3) versehen ist,
daß der Ladezustand, d. h. die verfügbare Kapazität der Energiespeicher (A1, A2, A3) mittels einer Meßeinrichtung (AÜ) erfaßt wird, und
daß bei geladenem Energiespeicher der Energieerzeuger auf den nächsten Energiespeicher umgeschaltet wird, bis dieser einen definierten Ladezustand (z. B. volle Kapazität) aufweist.

2. Verfahren nach Anspruch 1, **dadurch gekennzeichnet**,
daß die Verbraucher (HV, NV1, NV2) jeweils auf den Energiespeicher geschaltet werden der eine ausreichende Kapazität aufweist.

3. Verfahren nach Anspruch 1 oder 2, **dadurch gekennzeichnet**,
daß der Ladevorgang des jeweils ladenden Energiespeichers durch eine Meßeinrichtung (AÜ) überwacht wird,
daß bei nicht ausreichender Ladung innerhalb einer vorgegebenen Zeit der Ladevorgang dieses Energiespeichers abgeschaltet wird, und
daß die Ladeeinrichtung anschließend auf einen anderen Energiespeicher geschaltet wird.

4. Verfahren nach einem der vorstehenden Ansprüche, **dadurch gekennzeichnet,**
daß der Ladezustand (die verfügbare Kapazität) der Energiespeicher durch Meßeinrichtungen fortwährend überwacht wird, und
daß bei nicht Vorhandensein eines vorgegebenen Ladezustandes die jeweils angeschlossenen elektrischen Einrichtungen (Verbraucher) auf einen Energiespeicher mit voller Kapazität umgeschaltet, oder ggf. abgeschaltet werden.

5. Verfahren nach einem der vorstehenden Ansprüche, **dadurch gekennzeichnet**,
daß die verschiedenen elektrischen Einrichtungen (Verbraucher) des Gerätes unterschiedlichen Energiespeichern zugeordnet sind.

6. Verfahren nach einem der vorstehenden Ansprüche, **dadurch gekennzeichnet**,
daß die elektrischen Einrichtungen (Verbraucher) des Gerätes in Einrichtungen mit Haupt- und Nebenfunktionen aufgeteilt sind,
daß Verbraucher (HV) mit Hauptfunktionen, die zum Betrieb des Gerätes notwendig sind, wie z. B. Münzverarbeitung, Steuerung u. a., an den Energiespeicher geschaltet sind, der die höchste Kapazität aufweist, und
daß Verbraucher (NV1, NV2) mit Nebenfunktionen, wie z. B. Beleuchtung etc., entweder auf einen Energiespeicher mit niedrigem Ladezustand geschaltet sind oder ggf. vollständig abgeschaltet werden.
